# EUROPEAN PATENT APPLICATION

(11) **EP 4 811 497 A1**
(43) Date of publication of application: **23.09.2026**
(21) Application number: 26165055.0
(22) Date of filing: 16.03.2026
(51) Int. Cl.: H01M 10/613, H01M 10/625, H01M 10/6556, H01M 10/6567, H01M 50/204, H01M 50/224, H01M 50/242, B23K 20/12

(54) **BATTERY PACK, AND ELECTRIFIED VEHICLE EQUIPPED WITH BATTERY PACK**

(30) Priority: 21.03.2025 JP 2025047088
(71) Applicant: Toyota Jidosha Kabushiki Kaisha, Toyota-shi, Aichi-ken 471-8571 (JP)
(72) Inventor: YAMASHITA, Osamu, Toyota-shi, 471-8571 (JP); ARAKAWA, Takuya, Toyota-shi, 471-8571 (JP); IWATA, Makoto, Toyota-shi, 471-8571 (JP); KIMURA, Kenta, Toyota-shi, 471-8571 (JP); KIMURA, Ryo, Toyota-shi, 471-8571 (JP); TSUNEKAWA, Kunihiro, Toyota-shi, 471-8571 (JP); YANASE, Koichi, Toyota-shi, 471-8571 (JP)
(74) Representative: Kuhnen & Wacker Patent- und Rechtsanwaltsbüro PartG mbB

(57) **Abstract**

A battery pack (20) may include at least one battery cell (52), a casing (22) accommodating the at least one battery cell (52) and having a bottom wall (26) facing the at least one battery cell (52) from below, and a protective panel (38) joined to a lower surface (26b) of the bottom wall (26) of the casing (22) with adhesive (42). A weld bead (WJ) due to friction stir welding and a hole (26h) located at one end of the weld bead (WJ) may be present on the lower surface (26b) of the bottom wall (26) of the casing (22), and the hole (26h) may be covered with the adhesive (42).

## Description

### BACKGROUND OF THE INVENTION

### 1. Field of the Invention

The disclosure relates to a battery pack and an electrified vehicle equipped with a battery pack.

### 2. Description of Related Art

Japanese Unexamined Patent Application Publication No. 2024-147845 (JP 2024-147845 A) describes a casing of a battery pack. In this casing, a plurality of constituent members is joined together by friction stir welding. In friction stir welding, a tool with a protrusion (also referred to as a probe) at its tip is pressed against members to be joined while being rotated, thereby causing the protrusion to penetrate into the members to be joined. Around the tool, the members to be joined are softened by frictional heat and mixed together while undergoing plastic flow due to the rotation of the tool. Thus, the members to be joined are integrated.

### SUMMARY OF THE INVENTION

In friction stir welding, a characteristic weld bead remains on a product, and an exit hole for the tool is inevitably formed at one end of the weld bead. For this reason, if friction stir welding is adopted for the casing of a battery pack, the exit hole for the tool, formed on the surface of the casing, may adversely affect the sealing performance of the casing. It may be conceivable to cover the surface having an exit hole for the tool with a protective panel; however, it is difficult to reliably prevent entry of water and foreign matter only with the protective panel.

The disclosure provides a technology capable of improving the sealing performance of a casing manufactured by friction stir welding.

A technology of the disclosure provides a battery pack. The battery pack may include at least one battery cell, a casing accommodating the at least one battery cell and having a bottom wall facing the at least one battery cell from below, and a protective panel joined to a lower surface of the bottom wall of the casing with adhesive. A weld bead due to friction stir welding and a hole (that is, an exit hole for a tool) located at one end of the weld bead may be present on the lower surface of the bottom wall of the casing, and the hole may be covered with the adhesive.

With the above configuration, the hole due to friction stir welding is covered with the adhesive, so a decrease in sealing performance at the hole is avoided or suppressed. By using adhesive to bond the protective panel, it is possible to improve the sealing performance of the casing manufactured by friction stir welding without using a new component or process.

A technology of the disclosure also provides an electrified vehicle that travels on a road surface. The electrified vehicle includes a vehicle body and a battery pack supported by the vehicle body. The battery pack may adopt any battery pack of the disclosure. In this case, the protective panel of the battery pack may be exposed to the road surface. All the battery packs of the disclosure can be effectively adopted as a power supply for the electrified vehicle since the sealing performance of the casing is significantly improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram that schematically shows the configuration of an electrified vehicle;
FIG. 2 shows the configuration of a battery pack;
FIG. 3 shows a battery module when viewed from below;
FIG. 4 is a cross-sectional view taken along the line IV-IV in FIG. 2;
FIG. 5 is an enlarged view of portion V in FIG. 4;
FIG. 6 is a view of a casing when viewed from below; and
FIG. 7 shows a view of the battery pack, from below, in a state where a protective panel is attached to the battery pack.

### DETAILED DESCRIPTION OF EMBODIMENTS

In one embodiment of a technology, at least part of a hole may be filled with adhesive. With this configuration, it is possible to more reliably avoid or suppress a decrease in sealing performance at the hole.

In one embodiment of the technology, a bottom wall of a casing may include an upper panel and a lower panel that face each other. In this case, a channel for circulating a heat medium may be defined between the upper panel and the lower panel. With this configuration, there is a concern that the hole due to friction stir welding may reduce the sealing performance of the channel. However, since the hole is covered with the adhesive, such a concern can be eliminated or reduced.

In one embodiment of the technology, the upper panel and the lower panel may be joined to each other at a weld bead. With this configuration, the weld bead and/or the hole due to friction stir welding reaches the upper panel, so there is a more concern of a decrease in sealing performance at the hole. However, since the hole is covered with the adhesive, such a concern can be eliminated or reduced.

In one embodiment of the technology, the casing may further include a beam fixed to an upper surface of the bottom wall. In this case, the hole formed in a lower surface of the bottom wall may be located directly below the beam. With this configuration, while the hole is closed by the adhesive, the protective panel can be joined to part, reinforced by the beam, of the bottom wall of the casing with the adhesive.

In one embodiment of the technology, the beam of the casing may extend along the upper surface of the bottom wall. In this case, at least part of the weld bead may be located directly below the beam and may extend in the same direction as the beam along the lower surface of the bottom wall. In friction stir welding, unintended cavities may be formed not only at an exit hole for a tool but also in other portions of the weld bead. In such cases, if a beam is present directly above the weld bead, a decrease in the sealing performance of the casing due to the cavity can be avoided or suppressed by the beam.

In the above embodiment, the beam of the casing may be joined to the bottom wall at the weld bead. In other words, the weld bead may reach the beam from the bottom wall of the casing. By adopting the technology, friction stir welding can be actively adopted for joining various components that constitute the casing.

In one embodiment of the technology, an upper surface of the protective panel may have a main region and a projecting region projecting upward from the main region. In this case, the main region may face, via a clearance, the lower surface of the bottom wall of the casing. On the other hand, the projecting region may be joined to the lower surface of the bottom wall of the casing with the adhesive. With this configuration, when a clearance is formed between the protective panel and the casing, transmission of external force, applied to the protective panel, to the casing can be avoided or suppressed.

In the above-described embodiment, the casing may further include a beam fixed to the upper surface of the bottom wall. In this case, the hole formed in the lower surface of the bottom wall may be located directly below the beam and may be located directly above the projecting region of the upper surface of the protective panel. With this configuration, in addition to the above-described advantageous effects, while the hole can be closed by the adhesive, the protective panel can be joined to part, reinforced by the beam, of the bottom wall of the casing with the adhesive.

In one embodiment of the technology, the bottom wall of the casing may be made of a metal, and the protective panel may be made of a resin. Since the protective panel made of a resin is relatively lightweight, the protective panel can be bonded with sufficient strength even using adhesive.

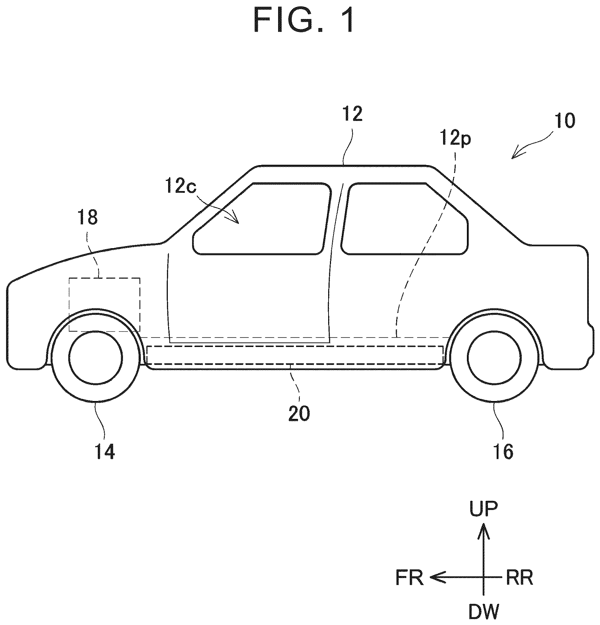

A battery pack 20 according to an embodiment will be described with reference to the accompanying drawings. The battery pack 20 of the present embodiment can be mounted on an electrified vehicle 10. The electrified vehicle 10 will be described with reference to FIG. 1. The electrified vehicle 10 is a battery electric vehicle (BEV). However, the electrified vehicle 10 is not limited to a BEV and may also be another type of electrified vehicle, such as a hybrid electric vehicle (HEV) and a plug-in hybrid electric vehicle (PHEV).

Here, the directions of the battery pack 20 in the specification and drawings refer to the orientations of the battery pack 20 when the battery pack 20 is mounted on the electrified vehicle 10 and correspond to directions within the electrified vehicle 10. In the drawings, the direction FR indicates a front side in a front and rear direction of the electrified vehicle 10, and the negative direction RR of the direction FR indicates a rear side in the front and rear direction of the electrified vehicle 10. The direction LH indicates a left-hand side in a right and left direction of the electrified vehicle 10, and the negative direction RH of the direction LH indicates a right-hand side in the right and left direction of the vehicle. The direction UP indicates an upside in an up and down direction of the electrified vehicle 10, and the negative direction DW of the direction UP indicates a downside in the up and down direction of the electrified vehicle 10.

The electrified vehicle 10 includes a vehicle body 12, a plurality of wheels 14, 16, and a motor unit 18 in addition to the battery pack 20. The electrified vehicle 10 is an electrified vehicle. The vehicle body 12 is formed of a metal, such as a steel-based material and an aluminum-based material. The wheels 14, 16 support the vehicle body 12. The wheels 14, 16 include a pair of the front wheels 14 located at the front of the vehicle body 12 and a pair of the rear wheels 16 located at the rear of the vehicle body 12. The front wheels 14 are respectively located on the right and left sides of the vehicle body 12. The rear wheels 16 are located on the right and left sides of the vehicle body 12. The vehicle body 12 has a cabin 12c inside. The cabin 12c is configured to be capable of accommodating occupants. The vehicle body 12 has a floor panel 12p. The floor panel 12p defines the floor of the cabin 12c.

The motor unit 18 includes a drive motor that drives the front wheels 14. However, the motor unit 18 is not limited to driving the front wheels 14 and may be configured to drive at least one of the wheels 14, 16. The motor unit 18 may be disposed forward of the cabin 12c.

The battery pack 20 is electrically connected to the motor unit 18 via, for example, a power converter (not shown). The battery pack 20 supplies the motor unit 18 with electric power for driving the wheels 14, 16. The battery pack 20 is disposed at a lower part of the vehicle body 12. Specifically, the battery pack 20 is disposed below the floor panel 12p of the vehicle body 12. The battery pack 20 is supported by the vehicle body 12. For example, the battery pack 20 may be fixed to the right and left side sills of the vehicle body 12.

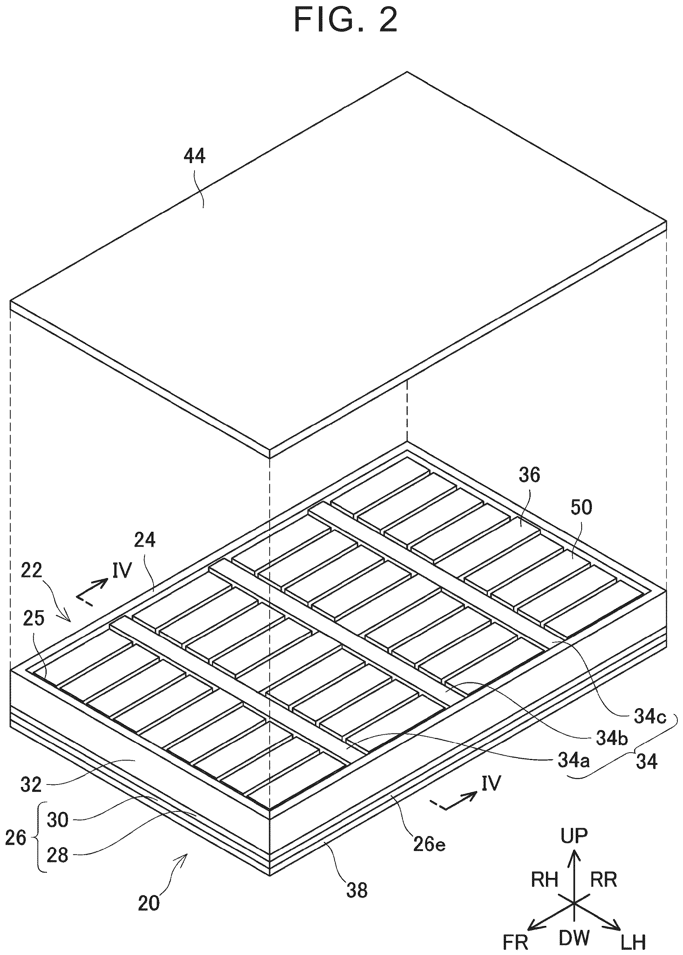

The details of the battery pack 20 will be described with reference to FIG. 2 to FIG. 7. As shown in FIG. 2, the battery pack 20 is a thin battery pack with a small dimension in the up and down direction. The battery pack 20 has a flat rectangular parallelepiped shape. The dimension of the battery pack 20 in the up and down direction is smaller than the dimension of the battery pack 20 in the right and left direction, and the dimension of the battery pack 20 in the right and left direction is smaller than the dimension of the battery pack 20 in the front and rear direction.

The battery pack 20 includes a plurality of battery modules 50, a casing 22, a protective panel 38, and a cover 44. The casing 22 accommodates the battery modules 50.

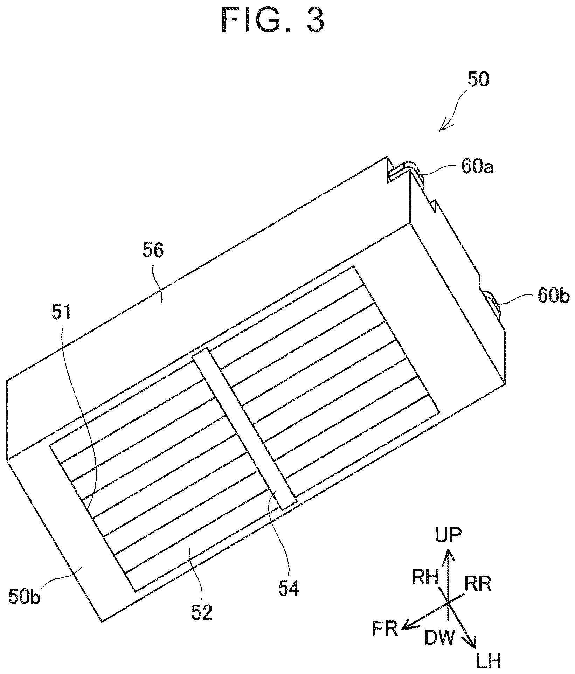

As shown in FIG. 3, each of the battery modules 50 includes a plurality of battery cells 52. In a modification, the battery module 50 may include only one battery cell 52. Each of the battery cells 52 is a secondary battery cell configured to be chargeable and dischargeable. The secondary battery cell is, for example, a lithium ion battery cell. The battery module 50 has an opening 51 in its lower surface 50b. At the lower surface 50b of the battery module 50, the end face of each of the battery cells 52 is exposed through the opening 51. Each of the battery cells 52 is a pouch-type battery (also referred to as a laminated battery). Each of the battery cells 52 has a flat shape. The battery cells 52 are stacked in the thickness direction (the right and left direction in FIG. 3). The battery cells 52 are restrained by a securing band 54 in a state compressed in the stacking direction. The battery module 50 has a positive terminal 60a and a negative terminal 60b on one end side in a direction (the front and rear direction in FIG. 3) perpendicular to the stacking direction of the battery cells 52. The battery module 50 has a module casing 56 accommodating the battery cells 52. The opening 51 is defined by the module casing 56.

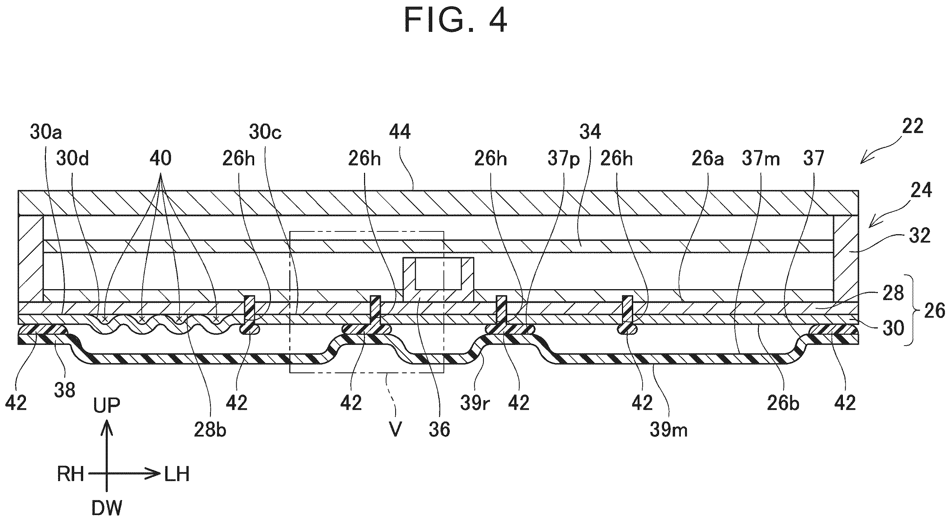

The casing 22 is made of a metal, such as aluminum. As shown in FIG. 2 and FIG. 4, the casing 22 includes a casing body 24 and a plurality of beams 34a, 34b, 34c, 36. The casing body 24 has a bottom wall 26 and a peripheral wall 32. The battery modules 50 are disposed on the bottom wall 26. The peripheral wall 32 is upright from the outer peripheral edge 26e of the bottom wall 26. The peripheral wall 32 extends all around the outer peripheral edge 26e of the bottom wall 26. The casing body 24 has an opening 25 that is open upward. The opening 25 is defined by the inner surface of the peripheral wall 32. The cover 44 is a plate-shaped member that is disposed so as to close the opening 25 of the casing body 24 from above. The cover 44 is made of a metal, such as aluminum.

The beams 34a, 34b, 34c, 36 are framework members of the casing 22. The beams 34a, 34b, 34c, 36 extend along the upper surface 26a of the bottom wall 26. The beams 34a, 34b, 34c, 36 include a plurality of first beams 34a, 34b, 34c, and a second beam 36. Each of the first beams 34a, 34b, 34c extends in the right and left direction so as to cross the upper surface 26a of the bottom wall 26. Each of the first beams 34a, 34b, 34c extends from the left-side peripheral wall 32 to the right-side peripheral wall 32. The second beam 36 extends in the front and rear direction so as to cross the upper surface 26a of the bottom wall 26. The first beams 34a, 34b, 34c are arranged at intervals from each other in the front and rear direction. The second beam 36 is disposed at the center of the bottom wall 26 in the right and left direction. Each of the first beams 34a, 34b, 34c (hereinafter, referred to as the first beams 34) is disposed orthogonally to the second beam 36. As shown in FIG. 4, each of the first beams 34 extends across the second beam 36. The first beams 34 and the second beam 36 are formed so as to be engageable with each other. The beams 34, 36 are fixed to the upper surface 26a of the bottom wall 26.

The bottom wall 26 includes an upper panel 28 and a lower panel 30 that face each other in the up and down direction. Each of the upper panel 28 and the lower panel 30 is a plate-shaped member. The upper panel 28 and the lower panel 30 are joined to each other. Channels 40 for circulating a heat medium are defined between the upper panel 28 and the lower panel 30. The bottom wall 26 of the casing 22 functions as a cooler for the battery modules 50. In an example, the lower panel 30 has a corrugated shape to form the channels 40. As a result, the upper surface 30a of the lower panel 30 has a contact region 30c that comes into contact with the lower surface 28b of the upper panel 28, and a recessed region 30d that is recessed downward from the contact region 30c. The channels 40 are formed between the lower surface 28b of the upper panel 28 and the recessed region 30d of the lower panel 30. The temperature of the battery modules 50 disposed on the upper surface 26a of the bottom wall 26 is adjusted by the flow of the heat medium through the channels 40. In an example, the heat medium may be coolant.

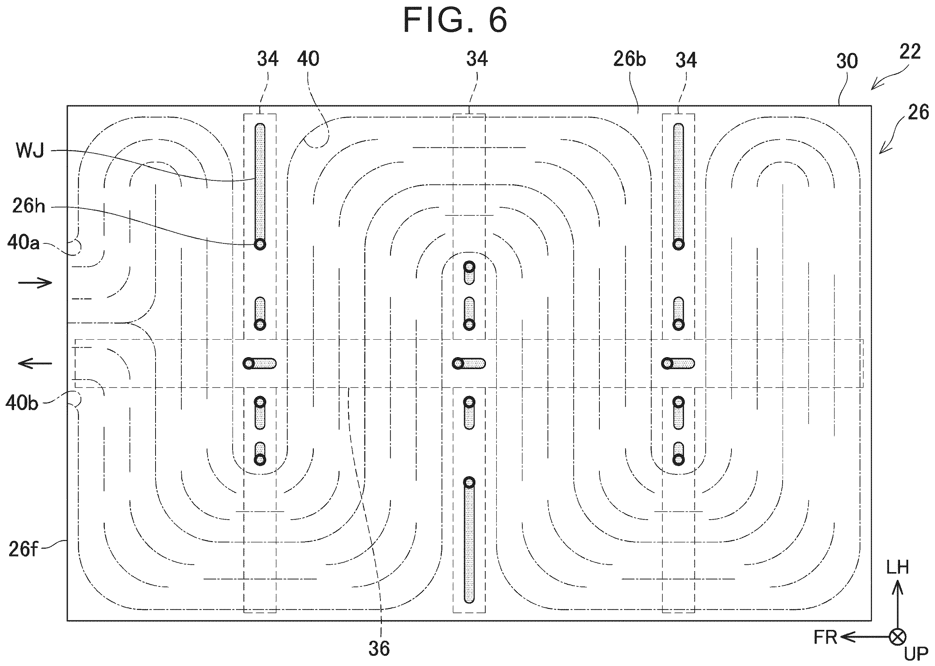

FIG. 6 is a view of the casing 22 when viewed from below. In FIG. 6, the channels 40 formed inside the bottom wall 26 are indicated by the alternate long and short dashed lines. In FIG. 6, the beams 34, 36 fixed to the upper surface 26a of the bottom wall 26 are indicated by the dashed lines. As shown in FIG. 6, a supply port 40a through which a heat medium is supplied to the channels 40 and a discharge port 40b through which the heat medium is discharged from the channels 40 are disposed at the front end 26f of the bottom wall 26. The channels 40 extend in a meandering manner from the supply port 40a to the discharge port 40b.

Friction stir welding is adopted for joining the upper panel 28 and lower panel 30 of the bottom wall 26. A plurality of weld beads WJ formed by friction stir welding is formed on the lower surface 26b of the bottom wall 26. In FIG. 6, the weld beads WJ are hatched. Each of the weld beads WJ extends along the lower surface 26b of the bottom wall 26. Each of the weld beads WJ is located directly below any one of the beams 34, 36. Each of the weld beads WJ extends in a direction in which the corresponding one of the beams 34, 36 extends (that is, the right and left direction or the front and rear direction). A hole 26h due to friction stir welding is formed at one end of each weld bead WJ in the direction in which the weld bead WJ extends. In other words, the hole 26h is formed at the time when a tool is withdrawn at the last stage of friction stir welding.

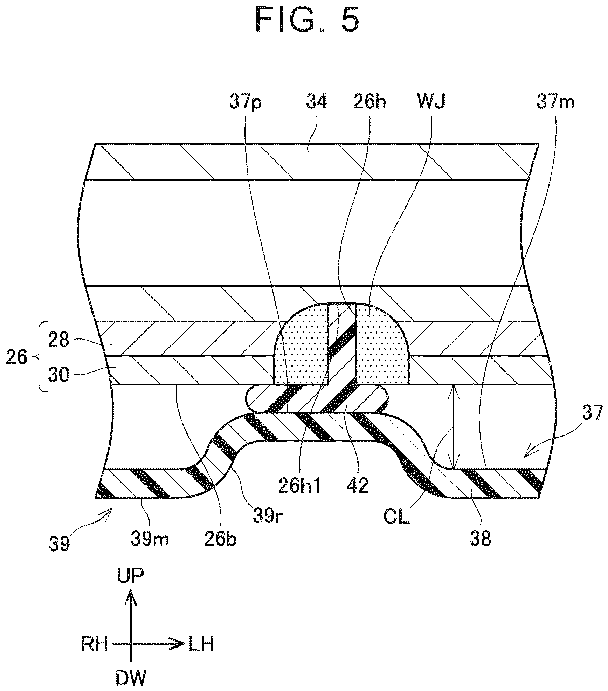

As shown in FIG. 4 and FIG. 5, each of the holes 26h penetrates through the lower panel 30 and the upper panel 28 and reaches the corresponding one of the beams 34, 36 (the first beam 34 in FIG. 2 and FIG. 5). The cross section of the weld bead WJ has an upward projecting dome shape. This cross section is a cross section taken perpendicularly to the direction in which the weld bead WJ extends. Each of the weld beads WJ is formed such that the cross-sectional area increases from the top surface 26h1 of the hole 26h toward the lower surface 26b of the bottom wall 26. Each of the weld beads WJ, as in the case of the hole 26h, extends from the lower panel 30 to the corresponding one of the beams 34, 36. In other words, the upper panel 28 and the lower panel 30 are joined to each other at the weld beads WJ. The beams 34, 36 are joined to the bottom wall 26 at the weld beads WJ.

The protective panel 38 is disposed on the lower surface 26b of the bottom wall 26. The protective panel 38 is a plate-shaped member having a predetermined profile. The protective panel 38 is a protective member and covers the bottom wall 26 from below. The protective panel 38 is located at the lowermost part of the battery pack 20 and is exposed to a road surface. By providing the protective panel 38, influences (such as collision and rain water) on the battery modules 50 from a road surface or the like are reduced. The protective panel 38 is joined to the lower surface 26b of the bottom wall 26 with adhesive 42. The protective panel 38 is made of a resin. Therefore, since the protective panel 38 is relatively lightweight, the protective panel 38 can be joined with sufficient strength even using the adhesive 42.

Some of the adhesive 42 that bonds the protective panel 38 bonds the protective panel 38 to the bottom wall 26 and covers the holes 26h on the lower surface 26b of the bottom wall 26. In an example, the adhesive 42 is also filled inside the holes 26h. In other words, the holes 26h are closed by the adhesive 42.

As described above, in the present embodiment, friction stir welding is adopted for joining the upper panel 28 and the lower panel 30. When friction stir welding is adopted for joining the panels 28, 30 that constitute the bottom wall 26 in this way, the characteristic weld beads WJ remain on the bottom wall 26, and the holes 26h are inevitably formed at one ends of the weld beads WJ. Particularly, the holes 26h formed as exit holes for a tool during friction stir welding may adversely affect the sealing performance of the casing 22.

In the present embodiment, the holes 26h due to friction stir welding on the lower surface 26b of the bottom wall 26 are covered with the adhesive 42. As a result, a decrease in sealing performance at the holes 26h is avoided or suppressed. By using the adhesive 42 to bond the protective panel 38 to the bottom wall 26, it is possible to improve the sealing performance of the casing 22 manufactured by friction stir welding without using a new component or process.

Particularly, in the present embodiment, each of the holes 26h in the bottom wall 26 is entirely filled with the adhesive 42. With this configuration, it is possible to more reliably avoid or suppress a decrease in the sealing performance of the casing 22 at the holes 26h. In a modification, each of the holes 26h does not need to be entirely filled with the adhesive 42. It is sufficient that each of the holes 26h is at least partially filled with the adhesive 42. Although not limited, the holes 26h in the bottom wall 26, facing a region other than the region where the protective panel 38 is bonded, may also be similarly covered with the adhesive 42.

In the present embodiment, the bottom wall 26 of the casing 22 includes the upper panel 28 and the lower panel 30 that face each other, and the channels 40 for circulating a heat medium are defined between the two panels 28, 30. With this configuration, there is a concern that the holes 26h due to friction stir welding may reduce the sealing performance of the channels 40. However, since the holes 26h are covered with the adhesive 42, such a concern can be eliminated or reduced.

In the present embodiment, the two panels 28, 30 that constitute the bottom wall 26 are joined to each other at the weld beads WJ. With this configuration, the weld beads WJ and/or the holes 26h due to friction stir welding reach the upper panel 28, so there is a more concern of a decrease in sealing performance at the holes 26h. However, since the holes 26h are covered with the adhesive 42, such a concern can be eliminated or reduced.

In the present embodiment, the holes 26h formed in the lower surface 26b of the bottom wall 26 are located directly below the beams 34, 36 fixed to the upper surface 26a of the bottom wall 26. With this configuration, while the holes 26h are covered with the adhesive 42, the protective panel 38 can be joined to part, reinforced by the beams 34, 36, of the bottom wall 26 of the casing 22 with the adhesive 42.

In the present embodiment, each of the weld beads WJ is located directly below a corresponding one of the beams 34, 36 and extends in the same direction as the corresponding one of the beams 34, 36 along the lower surface 26b of the bottom wall 26. In friction stir welding, unintended cavities may be formed not only at the holes 26h serving as exit holes for a tool but also in other portions of the weld beads WJ. In such a case, if the beams 34, 36 are present directly above the weld beads WJ, a decrease in the sealing performance of the casing 22 due to the cavities can be avoided or suppressed by the beams 34, 36. Each of the weld beads WJ does not need to be entirely located directly below a corresponding one of the beams 34, 36. Each of the weld beads WJ may be partially located directly below a corresponding one of the beams 34, 36.

In the present embodiment, the beams 34, 36 of the casing 22 are joined to the bottom wall 26 at the weld beads WJ. In other words, each of the weld beads WJ reaches a corresponding one of the beams 34, 36 from the bottom wall 26 of the casing 22. By adopting the technology, friction stir welding can be actively adopted for joining various components that constitute the casing 22.

Here, the protective panel 38 will be further described with reference to FIG. 4, FIG. 5, and FIG. 7. As shown in FIG. 4 and FIG. 5, the upper surface 37 of the protective panel 38 has a main region 37m and projecting regions 37p projecting upward from the main region 37m. The projecting regions 37p of the protective panel 38 are bonded to the lower surface 26b of the bottom wall 26 with the adhesive 42. The main region 37m of the protective panel 38 faces the lower surface 26b of the bottom wall 26 via a clearance CL. With this configuration, when the clearance CL is formed between the protective panel 38 and the casing 22, transmission of external force (that is, collision load), applied to the protective panel 38, to the casing 22 can be avoided or suppressed.

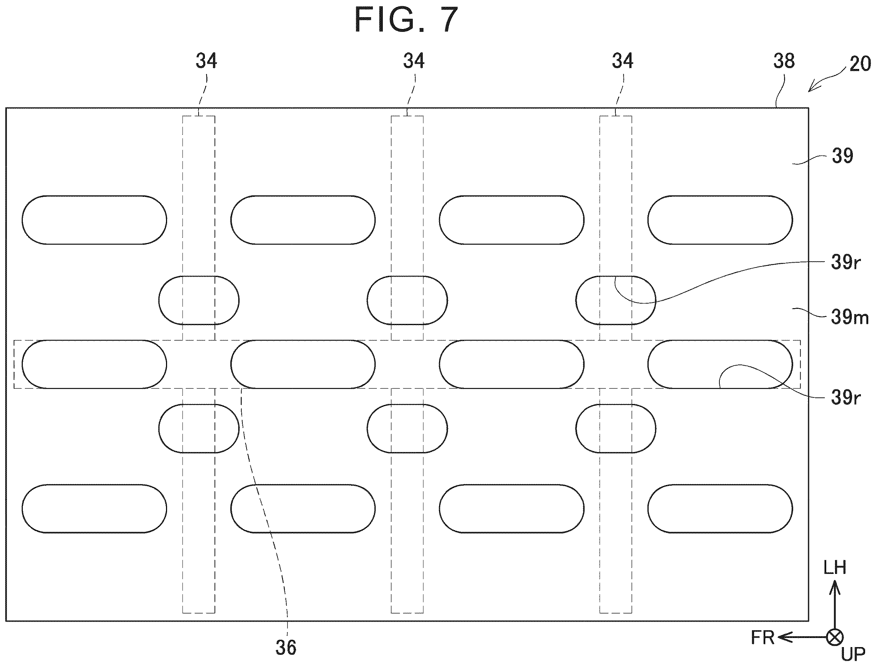

FIG. 7 shows a view of the battery pack 20 from below. In other words, FIG. 7 shows the lower surface 39 of the protective panel 38. As shown in FIG. 7, the lower surface 39 of the protective panel 38 has a main region 39m and recessed regions 39r recessed upward from the main region 39m. In the protective panel 38, the main region 39m of the lower surface 39 is located on the opposite side from the main region 37m of the upper surface 37, and the recessed regions 39r of the lower surface 39 are located on the opposite side from the projecting regions 37p of the upper surface 37. In FIG. 7, the beams 34, 36 disposed on the upper surface 26a of the bottom wall 26 are indicated by the dashed lines. As shown in FIG. 7, some of the recessed regions 39r are located directly below the beams 34, 36. In other words, in the protective panel 38, as in the case of the recessed regions 39r, some of the projecting regions 37p are also located directly below the beams 34, 36.

Since the sealing performance of the casing 22 is significantly improved, the battery pack 20 in the present embodiment can be effectively adopted as a power supply for the electrified vehicle 10 that travels on a road surface.

The protective panel 38 in the present embodiment may be a member made of a metal, for example, a member containing aluminum or iron as a main component, instead of a resin member. When the protective panel 38 is a member made of a metal, for example, a member containing aluminum or iron as a main component, the protective panel 38 may be joined using a known joining method, such as welding and fastening, in combination with the adhesive 42.

The embodiments of the technology have been described in detail above; however, these are only illustrative and are not intended to limit the appended claims. The technology described in the appended claims also encompasses various modifications and changes from the specific examples illustrated above. The technical elements described in the specification or the drawings exhibit technical usability solely or in various combinations and are not limited to combinations of the appended claims at the time of filing the application. The technology illustrated in the specification and the drawings can achieve multiple purposes at the same time and has technical usability by achieving one of those purposes.

## Claims

1. A battery pack (20) comprising:
at least one battery cell (52);
a casing (22) accommodating the at least one battery cell (52), the casing (22) having a bottom wall (26) facing the at least one battery cell (52) from below; and
a protective panel (38) joined to a lower surface (26b) of the bottom wall (26) of the casing (22) with adhesive (42), wherein:
a weld bead (WJ) due to friction stir welding and a hole (26h) located at one end of the weld bead (WJ) are present on the lower surface (26b) of the bottom wall (26) of the casing (22); and
the hole (26h) is covered with the adhesive (42).

2. The battery pack (20) according to claim 1, wherein at least part of the hole (26h) is filled with the adhesive (42).

3. The battery pack (20) according to claim 1, wherein the hole (26h) is entirely filled with the adhesive (42).

4. The battery pack (20) according to claim 1, wherein:
the bottom wall (26) of the casing (22) includes an upper panel (28) and a lower panel (30) that face each other; and
a channel (40) for circulating a heat medium is defined between the upper panel (28) and the lower panel (30).

5. The battery pack (20) according to claim 4, wherein the upper panel (28) and the lower panel (30) are joined to each other at the weld bead (WJ).

6. The battery pack (20) according to claim 1, wherein:
the casing (22) further includes a beam (34, 36) fixed to an upper surface (26a) of the bottom wall (26); and
the hole (26h) formed in the lower surface (26b) of the bottom wall (26) is located directly below the beam (34, 36).

7. The battery pack (20) according to claim 6, wherein:
the beam (34, 36) of the casing (22) extends along the upper surface (26a) of the bottom wall (26); and
at least part of the weld bead (WJ) is located directly below the beam (34, 36) and extends in the same direction as the beam (34, 36) along the lower surface (26b) of the bottom wall (26).

8. The battery pack (20) according to claim 7, wherein the beam (34, 36) of the casing (22) is joined to the bottom wall (26) at the weld bead (WJ).

9. The battery pack (20) according to claim 1, wherein:
an upper surface (37) of the protective panel (38) has a main region (37m) and a projecting region (37p) projecting upward from the main region (37m);
the main region (37m) faces, via a clearance (CL), the lower surface (26b) of the bottom wall (26) of the casing (22); and
the projecting region (37p) is joined to the lower surface (26b) of the bottom wall (26) of the casing (22) with the adhesive (42).

10. The battery pack (20) according to claim 9, wherein:
the casing (22) further includes a beam (34, 36) fixed to an upper surface (26a) of the bottom wall (26); and
the hole (26h) formed in the lower surface (26b) of the bottom wall (26) is located directly below the beam (34, 36) and is located directly above the projecting region (37p) of the upper surface (37) of the protective panel (38).

11. The battery pack (20) according to claim 1, wherein:
the bottom wall (26) of the casing (22) is made of a metal; and
the protective panel (38) is made of a resin.

12. An electrified vehicle (10) configured to travel on a road surface, the electrified vehicle (10) comprising:
a vehicle body (12); and
the battery pack (20) according to any one of claims 1 to 11, supported by the vehicle body (12), wherein
the protective panel (38) of the battery pack (20) is exposed to the road surface.
